# EUROPEAN PATENT APPLICATION

(11) **EP 3 358 892 A1**
(43) Date of publication of application: **08.08.2018**
(21) Application number: 16851492.5
(22) Date of filing: 27.09.2016
(51) Int. Cl.: H04W 56/00, H04W 92/18

(54) **USER EQUIPMENT AND SYNCHRONIZATION METHOD**

(30) Priority: 02.10.2015 JP 2015197223
(71) Applicant: NTT DOCOMO, INC., Chiyoda-ku Tokyo 100-6150 (JP)
(72) Inventor: YASUKAWA, Shimpei, Tokyo 100-6150 (JP); NAGATA, Satoshi, Tokyo 100-6150 (JP); HARADA, Hiroki, Tokyo 100-6150 (JP); ZHAO, Qun, Beijing 100190 (CN); ZENG, Yongbo, Beijing 100190 (CN)
(74) Representative: Hoffmann Eitle
(86) International application number: PCT/JP2016/078381
(87) International publication number: WO 2017/057321

(57) **Abstract**

There is provided a user apparatus of a radio communication system supporting D2D communication, the user apparatus including a receiver configured to receive a first synchronization signal transmitted from a base station, a second synchronization signal transmitted from another user apparauts, or an external synchronization signal or external synchronization information transmitted from an external synchronization source; and a synchronization processor configured to execute synchronization using the first synchronization signal, the second synchronization signal, or the external synchronization signal or the external synchronization information received by the receiver; wherein, upon detecting that the user apparatus is outside a coverage area of the base station or outside an area in which the synchronization signal or the synchronization information can be received, the receiver is configured to receive the second synchronization signal by executing an initial search within a time window defined for monitoring the second synchronization signal.

## Description

### TECHNICAL FIELD

The present invention relates to a user apparatus and a synchronization method.

### BACKGROUND ART

In Long Term Evolution (LTE) and successor systems (e.g., LTE-Advanced (LTE-A), Future Radio Access (FRA), and 4G) to LTE, a Device to Device (D2D) technology where user terminals directly communicate with each other without the intervention of a radio base station is being considered (see, for example, Non-Patent Document 1).

D2D makes it possible to reduce the traffic between a user apparatus and a base station and enables user apparatuses to communicate with each other even when base stations become incapable of communication due to disasters or the like.

D2D is roughly divided into D2D discovery for finding another user apparatus that is capable of communication and D2D communication (which may also be referred to as D2D direct communication or inter-terminal direct communication) for allowing terminals to directly communicate with each other. In the descriptions below, D2D communication and D2D discovery are simply referred to as D2D when it is not necessary to make a distinction between them. Further, signals transmitted and received in D2D are referred to as D2D signals.

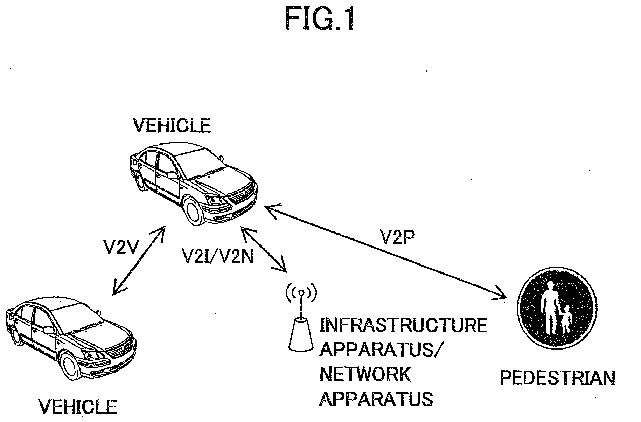

Further, in the 3rd Generation Partnership Project (3GPP), it has been studied to achieve V2X by extending D2D functions. Here, V2X is a part of Intelligent Transport Systems (ITS) and as illustrated in FIG. 1, is a generic term for Vehicle to Vehicle (V2V) that indicates communication performed between vehicles, Vehicle to Infrastructure (V2I) that indicates communication performed between a vehicle and a road-side unit (RSU) installed on a roadside, Vehicle to Nomadic device (V2N) that indicates communication performed between a vehicle and a mobile terminal of a driver, and Vehicle to Pedestrian (V2P) that indicates communication between a vehicle and a mobile terminal of a pedestrian.

### Prior Art Document

### [Non-Patent Document]

Non-Patent Document 1: "Key drivers for LTE success: Services Evolution", September 2011, 3GPP, Internet URL: http://www.3gpp.org/ftp/Information/presentations/pr esentations_2011/2011 _09 _LTE_Asia/2011_LTE-Asia_3GPP_Service_evolution.pdf

### SUMMARY OF THE INVENTION

### [PROBLEM TO BE SOLVED BY THE INVENTION]

It is defined that, in a cell (frequency, carrier) for D2D communication, a user apparatus supporting D2D performs synchronization, within coverage of a base station, by a Synchronization Signal (SS) that is transmitted from the base station and performs synchronization, outside the coverage, by a Sidelink Synchronization Signal (synchronization signal for D2D: SLSS) that is transmitted from another user apparatus.

Here, in V2X, it is anticipated that the user apparatus often moves to the outside the coverage such as the inside of a tunnel. That is, it is anticipated that the user apparatus performs synchronization with the SLSS at a very frequent rate.

The disclosed technique is made in consideration of the above points, and an object is to provide a technique with which a synchronization signal for D2D can be effectively received.

### [MEANS FOR SOLVING THE PROBLEM]

A user apparatus of the disclosed technique is a user apparatus of a radio communication system supporting D2D communication, the user apparatus including a receiver configured to receive a first synchronization signal transmitted from a base station, a second synchronization signal transmitted from another user apparatus, or an external synchronization signal or external synchronization information transmitted from an external synchronization source; and a synchronization processor configured to execute synchronization using the first synchronization signal, the second synchronization signal, or the external synchronization signal or the external synchronization information received by the receiver; wherein, upon detecting that the user apparatus is outside a coverage area of the base station or outside an area in which the synchronization signal or the synchronization information can be received, the receiver is configured to receive the second synchronization signal by executing an initial search within a time window defined for monitoring the second synchronization signal.

### [ADVANTAGE OF THE INVENTION]

According to the disclosed technique, a technique, with which a synchronization signal for D2D can be effectively received, is provided.

### BRIEF DESCRIPTION OF DRAWINGS

FIG. 1 is a diagram for describing V2X;
FIG. 2 is a diagram for describing a physical channel structure defined in D2D;
FIG. 3A is a diagram illustrating an example of a structure of PSSSs/SSSSs;
FIG. 3B is a diagram illustrating an example of a structure of PSSSs/SSSSs;
FIG. 4 is a diagram illustrating a synchronization processing model in D2D;
FIG. 5 is a diagram illustrating an example of a system configuration of a radio communication system according to each embodiment;
FIG. 6 is a diagram illustrating an example of a length of a time window for monitoring a SLSS;
FIG. 7 is a diagram illustrating an example of a functional configuration of a user apparatus according to a first embodiment;
FIG. 8 is a sequence diagram illustrating a processing procedure that a radio communication system according to a second embodiment performs;
FIG. 9 is a diagram illustrating an example of GAP intervals;
FIG. 10 is a diagram illustrating offsets of subframes through which the SLSSs are transmitted/received;
FIG. 11 is a diagram illustrating an example of a functional configuration of a user apparatus according to the second embodiment;
FIG. 12 is a diagram for describing a use of each carrier;
FIG. 13 is a diagram illustrating an example of a functional configuration of a user apparatus according to a third embodiment;
FIG. 14A is a diagram illustrating an example of a structure of PSSSs/SSSSs according to a fourth embodiment;
FIG. 14B is a diagram illustrating an example of a structure of PSSSs/SSSSs according to the fourth embodiment;
FIG. 15 is a diagram illustrating an example of a functional configuration of a user apparatus according to a fourth embodiment; and
FIG. 16 is a diagram illustrating an example of a hardware configuration of the user apparatus according to each embodiment.

### EMBODIMENTS of THE INVENTION

In the following, embodiments of the present invention are described with reference to the accompanying drawings. Note that the embodiments described below are examples, and embodiments, to which the present invention is applied, are not limited to the embodiments described below. For example, although it is assumed that a radio communication system according to the embodiments is a system that conforms to LTE, the present invention is not limited to LTE and may also be applied to other types of systems. Note that in the specification and the claims of the present application, "LTE" is used in a broad sense including not only a communication system corresponding to 3GPP release 8 or 9, but 3GPP release 10, 11, 12, 13, or a fifth-generation communication system corresponding to on or after release 14.

Furthermore, although the embodiment is intended mainly for V2X, a technique according to the embodiment is not limited to V2X, and can be broadly applied to D2D in general. By this meaning, "D2D" is understood to include V2X. According to the embodiment, the meaning of "base station eNB" is understood to include a RSU (base station type RSU, a user apparatus type RSU) unless otherwise mentioned.

### <Outline of D2D>

First, an outline of D2D defined in LTE is described first. In D2D communication, a part of uplink resources predefined as resources for uplink signal transmission from a user apparatus UE to a base station eNB is used, and within coverage, D2D signals are transmitted/received in synchronization with SSs that the base station eNB transmits.

Furthermore, in order to implement D2D communication outside the coverage, it is specified that the user apparatus UE transmits (relays) a SLSS when a predetermined condition is satisfied, such as a case where the user apparatus UE is located at a cell edge (edge of the coverage) of a cell for D2D communication and a case where the user apparatus UE is outside the coverage and unable to receive the SLSS from another user apparatus UE. More specifically, a SLSS is a Primary Sidelink Synchronization Signal (PSSS) and a Secondary Sidelink Synchronization Signal (SSSS). Further, the user apparatus UE, which transmits the SLSS, can report, to other user apparatuses UE that are present outside the coverage, a radio frame number, a system bandwidth, and the like by using a physical channel called a Physical Sidelink Broadcast Control Channel (PSBCH).

In the cell for the D2D communication, the user apparatus UE receives the SS signal within the coverage of the base station eNB to perform synchronization. Further, upon moving outside the coverage from inside the coverage, the user apparatus UE operates to perform an initial search for SLSS(s) in order to receive a SLSS transmitted from another user apparatus UE. The initial search (which may also be referred to as the full search) is to monitor all possible subframes, through which the SLSSs are transmitted, and to search for all possible SLSSIDs (which may also be referred to as SLIDs (Sidelink IDs)) to discover candidates of the SLSSs to be used for synchronization. Note that "to monitor" refers to an operation for confirming whether a predetermined radio signal is transmitted within a predetermined radio resource (such as a subframe). Subsequently, the user apparatus UE selects a SLSS from the candidates of the SLSSs discovered by the initial search, and uses the selected SLSS to perform synchronization.

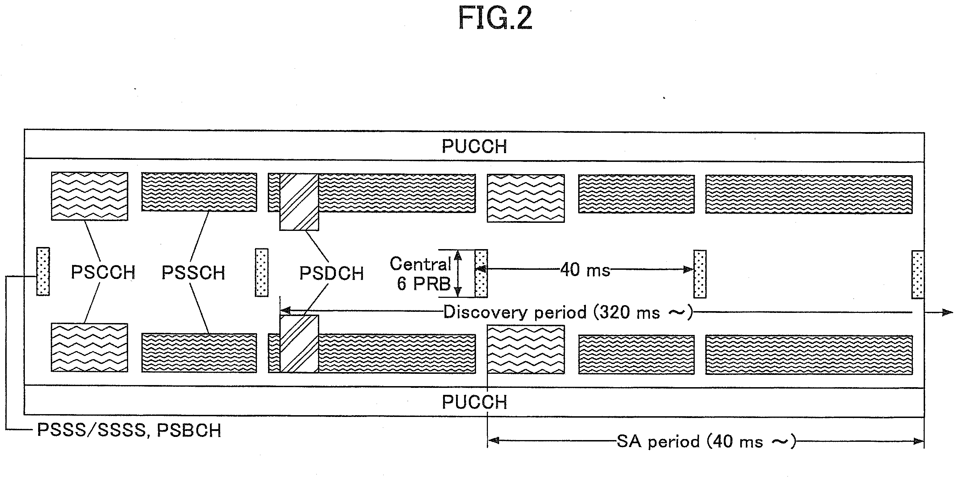

Next, the SLSS and the PSBCH specified in D2D are described. FIG. 2 illustrates a configuration of a physical channel in D2D. Note that in FIG. 2, the Physical Sidelink Discovery Channel (PSDCH) is a physical channel used for "D2D discovery", the Physical Sidelink Control Channel (PSCCH) is a physical channel for transmitting control information such as SCI in "D2D communication", and the Physical Sidelink Shared Channel (PSSCH) is a physical channel for transmitting data in "D2D communication".

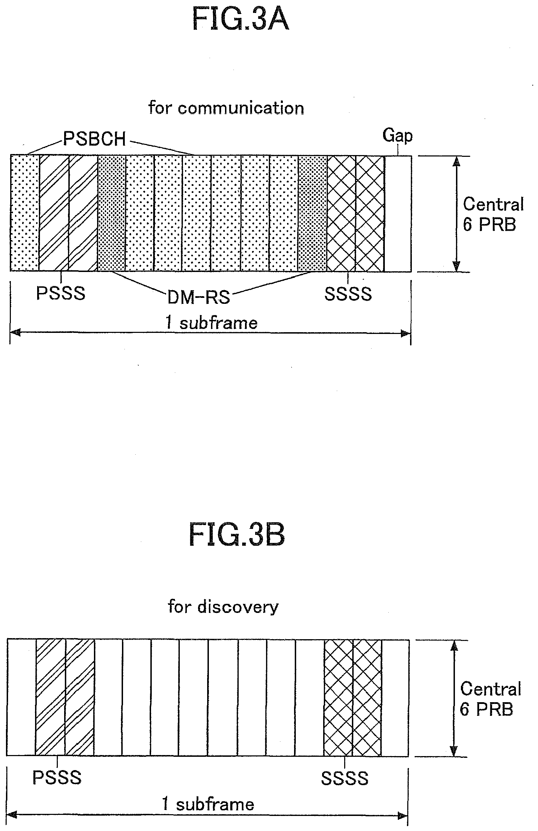

FIG. 3A and FIG. 3B are diagrams illustrating examples of structures of PSSSs/SSSSs. As illustrated in FIG. 3A and FIG. 3B, in D2D, the PSSS and the SSSS are mapped onto predetermined SC-FDMA symbols within one subframe, in the 6 physical resource blocks (PBRs) at the center of the frequency band. Further, in "D2D communication", a PSBCH is mapped onto SC-FDMA symbols except for SC-FDMA symbols for the PSSS, the SSSS, and a Demodulation-Reference Signal (DM-RS). Further, as illustrated in FIG. 2, the PSSS, the SSSS, and the PSBCH are transmitted at 40 ms intervals. A Zadoff-Chu sequence is used for the PSSS, and an M sequence is used for the SSSS.

Further, in D2D, two kinds of SLSSs, which are a SLSS transmitted within the coverage and a SLSS transmitted outside the coverage, are defined. A route index of the PSSS that is transmitted within the coverage is "26", and a SLID in a range from 0 to 167 is specified by a PSSS and a SSSS. A route index of the PSSS that is transmitted within the coverage is "37", and a SLID in a range from 168 to 355 is specified by a PSSS and a SSSS. Further, an identifier, called In-coverage indicator, is stored in the PSBCH, and it is set to be "1" within the coverage, and it is set to be "0" outside the coverage.

### <Synchronization model>

Next, a synchronization processing model in current D2D is described. As described above, the user apparatus UE, which has moved from inside the coverage to outside the coverage, performs an initial search for a SLSS.

As half-duplex communication is adopted for D2D, the user apparatus UE is incapable of transmitting other D2D signals through subframes for receiving (or monitoring) the SLSSs. Accordingly, when monitoring the SLSS at a very frequent rate, quality deterioration of the D2D signal (sound packet in "D2D communication", specifically) occurs. Thus, the specification of the 3GPP allows to drop (discard), at a rate up to 2%, one or more D2D signals to be transmitted so as to monitor a SLSS during an initial search for the SLSS.

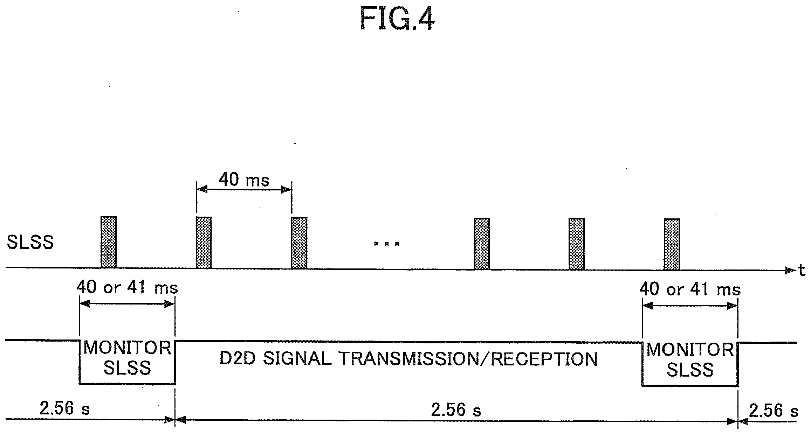

As illustrated in FIG. 4, as a basis of 2% described above, 3GPP has evaluated a synchronization processing model such that a SLSS is detected by monitoring a subframe of 40 ms or 41 ms at a period of 2.56 seconds. In the example of FIG. 4, a D2D signal other than the SLSS is dropped at a probability 2.56/41 ms = 1.6% (approximately 2%). The reason that the subframes to be monitored are configured to be 40 ms or 41 ms is that the intervals of transmitting the SLSS are 40 ms, and that the user apparatus UE that performs the initial search for the SLSS may not aware of the subframe on which the SLSS is transmitted.

For finding the SLSS by the user apparatus UE, in-phase combining of up to approximately 10 subframes is required when reception quality of the SLSS is low. Accordingly, under the condition where it is allowed to drop D2D signals to be transmitted at a rate up to 2%, a maximum of approximately 20 seconds is required for the user apparatus UE to discover the SLSS.

Note that FIG. 4 illustrates a synchronization processing model simply for evaluation purposes and is not intended to define specific timing(s) at which the user apparatus UE monitors the SLSS(s).

### <Entire configuration of system>

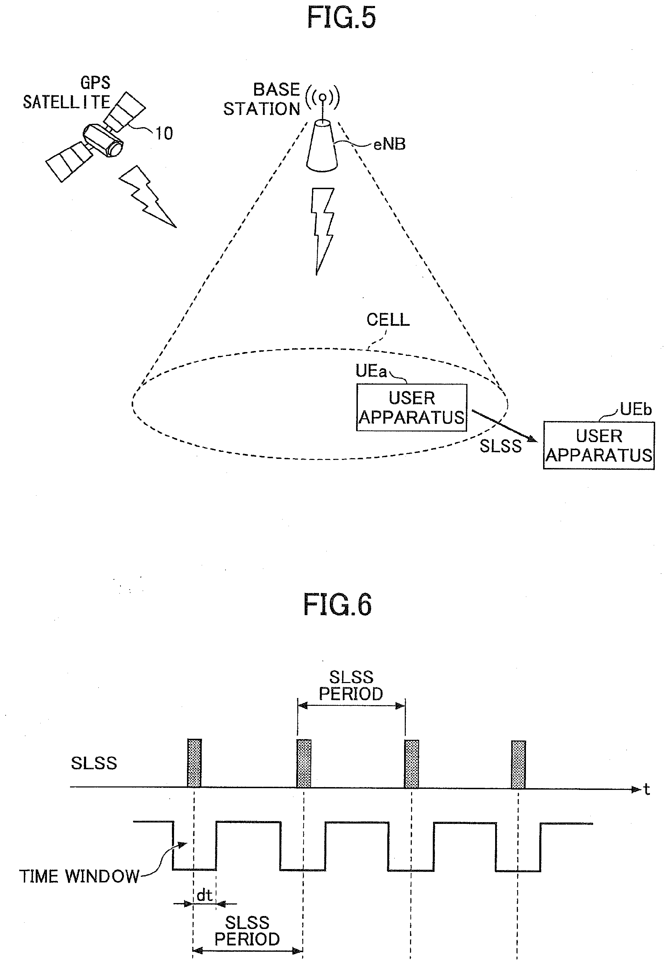

FIG. 5 is a diagram illustrating an example of a system configuration of a radio communication system according to each embodiment. As illustrated in FIG. 5, the radio communication system according to each embodiment includes a base station eNB, a GPS satellite 10, a user apparatus UEa, and a user apparatus UEb.

The base station eNB transmits SSs to the user apparatuses UE. The SS is more specifically a Primary Synchronization Signal (PSS) and a Secondary Synchronization Signal (SSS).

The GPS satellite 10 transmits GPS signals to ground. The GPS signal includes information specifying Coordinated Universal Time (UTC).

The user apparatuses UEa and UEb have functions to perform D2D communication. Although the example of FIG. 5 illustrates a situation in which the user apparatus UEa transmits the SLSS to the user apparatus UEb, it is for convenience of illustration. The user apparatus UEa and the user apparatus UEb have the same functions. Note that, in the following description, when the user apparatus UEa and the user apparatus UEb are not particularly distinguished, they are simply described as the "user apparatus UE".

The user apparatus UE uses the SS or the SLSS to perform synchronization. The synchronization includes radio frame synchronization (symbol timing synchronization, time synchronization) and frequency synchronization. The user apparatus UE may have or may not have a function to use the GPS signal to perform synchronization. In a case of performing the synchronization by using the GPS signal, for example, the user apparatus UE may previously store information (referred to as "synchronization information" hereinafter), which associates a UTC with a time at which a radio frame is started and a radio frame number, and may perform radio frame synchronization (symbol timing synchronization, time synchronization) by comparing the UTC, obtained from the GPS signal, with the synchronization information. In response to detecting that the user apparatus UE is unable to receive a GPS signal (including a case where reception quality of the GPS signal is less than or equal to a predetermined threshold value), the user apparatus UE may perform the initial search for the SLSS.

Note that the GPS signal may be a signal using GNSS, or may be an external synchronization signal or external synchronization information that is transmitted from an external synchronization source more generally. The embodiment is described using the GPS signal as an example of the external synchronization signal or the external synchronization information unless otherwise noted.

In the following, the processing procedures executed by the radio communication system according to the embodiment is described separately in a plurality of embodiments. Note that the respective embodiments may be suitably combined.

### <First embodiment>

### [Processing procedure]

The user apparatus UE according to the first embodiment increases frequency of monitoring the SLSS by increasing (to 10%, for example) the rate of dropping the D2D signal scheduled to be transmitted in the initial search for the SLSS. Specifically, the user apparatus UE may perform the initial search for the SLSS by monitoring the subframe of 40 ms or 41 ms at intervals shorter than 2.56 seconds.

Further, in the initial search for the SLSS, the user apparatus UE may perform the initial search for the SLSS by monitoring the SLSS within a time window determined in order to periodically (intervals shorter than at least 2.56 seconds) monitor the SLSS (simply referred to as "time window" hereinafter). Further, within the time window, the user apparatus UE may drop all D2D signals scheduled to be transmitted.

FIG. 6 is a diagram illustrating an example of a length of the time window. The length (dt x 2) of the time window may be 40 ms or 41 ms, or may be an interval shorter than a SLSS period as illustrated in FIG. 6.

A value of dt may be previously designated in accordance with accuracy of an internal clock of the user apparatus UE, or may be calculated within the user apparatus UE in consideration of a time lag of the internal clock increasing in accordance with time elapsing from timing of synchronization loss with the SS or the GPS signal.

A range of the time window may be reported to the user apparatus UE by a RRC signal or report information (SIB: System Information Block) transmitted from the base station eNB, may be previously configured in a Subscriber Identity Module (SIM), or may be reported to the user apparatus UE via a control signal of a higher layer transmitted from a core network.

Further, the range of the time window (a start point and an end point on a time axis, for example) may be specified by one or more subframe numbers and a radio frame number determined by synchronizing with the SS or the GPS signal, or may be specified by a UTC time. Alternatively, the range of the time window may be specified by a value of dt (1 ms, for example), the subframe numbers, and the radio frame number indicating the center of the time window, or only the subframe numbers and the radio frame number indicating the center of the time window may be specified and a value calculated within the user apparatus UE may be used as the value of dt.

As described above, according to the first embodiment, the user apparatus UE can efficiently receive the SLSS, and the time required from discovering the SLSS to synchronizing with the SLSS can be shortened.

Additionally, through the setting of the time window, the user apparatus UE can identify in advance the subframe(s) for monitoring the SLSS in the initial search for the SLSS. Further, by reporting the time window from the base station eNB or the like, a rate of D2D signals to be dropped can be changed in accordance with a property of a cell or a carrier.

Further, as a result that the length of the time window is specified to be shorter than the transmission period of the SLSS, the user apparatus UE can receive the SLSS without monitoring the entire subframe of 40 ms, which is the transmission period of the SLSS, and discovery of the SLSS and synchronization with the SLSS can be quickly performed while reducing the rate of the D2D signals to be dropped.

### [Functional configuration]

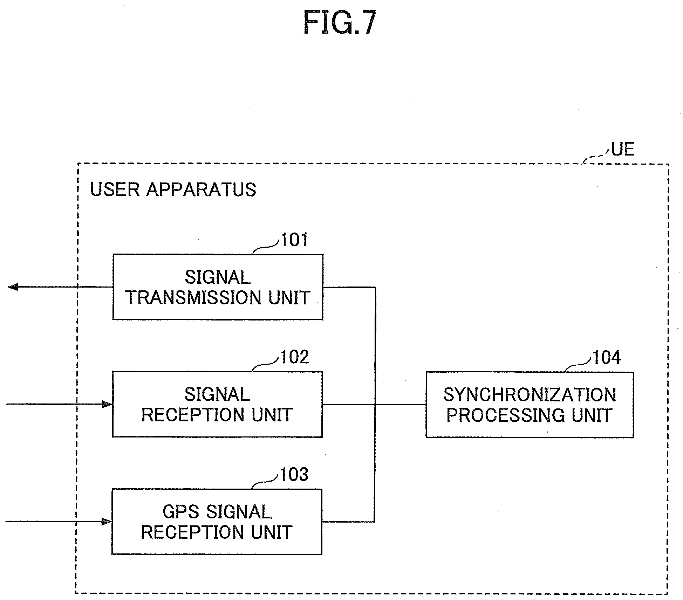

FIG. 7 is a diagram illustrating an example of a functional configuration of the user apparatus according to the first embodiment. As illustrated in FIG. 7, the user apparatus UE includes a signal transmission unit 101, a signal reception unit 102, a GPS signal reception unit 103, and a synchronization processing unit 104. Note that FIG. 7 illustrates only the functional units particularly relevant to the embodiment of the present invention in the user apparatus UE, and the user apparatus UE has at the least functions, not illustrated, for performing an operation in conformance with LTE. In addition, the functional configuration illustrated in FIG. 7 is merely one example. Functional classifications and names of the functional units are not limited as long as the operation of this embodiment is executable thereby.

The signal transmission unit 101 includes functions to generate various signals of a physical layer, from signals of higher layers to be transmitted from the user apparatus UE, and to transmit wirelessly the various signals. Further, the signal transmission unit 101 includes a transmission function for D2D signals, and a transmission function for cellular communication. Moreover, the signal transmission unit 101 includes a function to transmit SLSSs to other user apparatuses UE.

The signal reception unit 102 includes functions to wirelessly receive various signals from other user apparatuses UE or the base station eNB, and to obtain signals of the higher layers from the received signals of the physical layer. Further, the signal reception unit 102 includes a reception function for D2D signals and a reception function for cellular communication.

Further, in response to detecting that it is outside the coverage area of the base station eNB or/and it is outside the area where a GPS signal is receivable, the signal reception unit 102 operates to receive a SLSS by performing an initial search. Whether it is within the area where the GPS signal is receivable can be defined more generally by determining whether an external synchronization signal or external synchronization information can be obtained or by determining whether synchronization accuracy of the external synchronization signal or the external synchronization information is higher than or equal to a fixed level (such as whether an estimated synchronization error is less than or equal to a fixed value or whether a reception level of the external synchronization signal or the external synchronization information is higher than or equal to a fixed level). Further, in response to detecting that it is outside the coverage area of the base station eNB or/and it is outside the area where the GPS signal is receivable, the signal reception unit 102 may receive the SLSS by performing the initial search within the time window.

The GPS signal reception unit 103 has a function to receive GPS signals. Further, the GPS signal reception unit 103 may include a function to generate and output a Pulse Per Second (PPS).

The synchronization processing unit 104 uses a GPS signal, a SS, or a SLSS to perform synchronization. Further, when the SLSS is received (discovered) within a time window in the signal reception unit 102, the synchronization processing unit 104 may use the received (discovered) SLSS to perform the synchronization.

### <Second embodiment>

### [Processing procedure]

The user apparatus UE according to the first embodiment performs the initial search for the SLSS upon moving to outside the coverage of the base station eNB or to outside the area in which the GPS signal is receivable. However, a user apparatus UE according to a second embodiment previously performs an initial search for the SLSS within the coverage or within the area in which the GPS signal is receivable. Thereby, it becomes possible to perform, after moving to outside the coverage or outside the area in which the GPS signal is receivable, synchronization using the SLSS promptly.

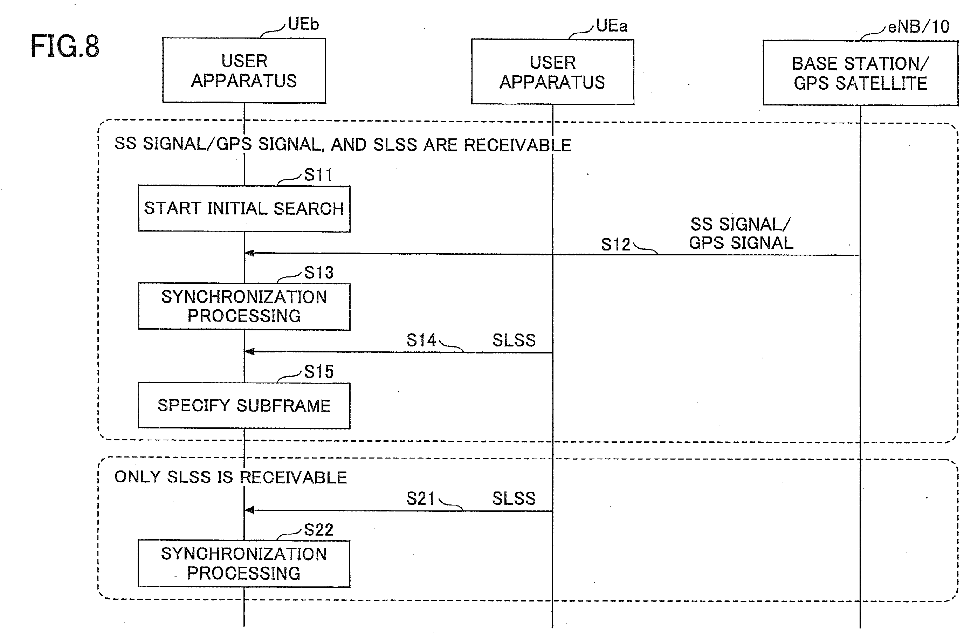

FIG. 8 is a sequence chart illustrating a processing procedure to be executed by a radio communication system according to the second embodiment. Note that the processing procedure illustrated in FIG. 8 is an example, and the order of the processing procedure of steps S11 to S13 is not limited. For example, the processing procedure of step S11 may be performed after step S13.

The user apparatus UEa performs an initial search for a SLSS within the coverage or an area in which a GPS signal is receivable (S11). For example, the user apparatus UE may implement the initial search by monitoring the SLSS at timing illustrated in FIG. 4, or may implement the initial search by monitoring the SLSS within the time window described in the first embodiment. Alternatively, the user apparatus UE may always perform the initial search regardless of a position of the user apparatus UE itself, or may perform the initial search in a case where Reference Signal Received Quality (RSRP) or Reference Signal Received Power (RSPQ) of a signal (such as a reference signal, for example) that the base station eNB transmits is less than or equal to a predetermined threshold value, in a case where a reception level of the GPS signal is less than or equal to a predetermined threshold value, or in a case where a synchronization level (synchronization accuracy) is less than or equal to a fixed level.

The user apparatus UEa receives a SS that is transmitted from the base station eNB or a GPS signal that is transmitted from the GPS satellite 10 (S12), and performs synchronization by using the received SS or the received GPS signal (S13).

Here, it is assumed that a SLSS is periodically transmitted from the user apparatus UEb (S14). Upon discovering, by the initial search, the SLSS that is periodically transmitted from the user apparatus UEb, the user apparatus UEa specifies a subframe through which the SLSS is transmitted (S15). More specifically, the user apparatus UEa selects a SLSS to be received when the user apparatus UEa itself moves to outside the coverage or to outside the area in which the GPS signal is receivable, and specifies subframe numbers and a radio frame number of the subframes through which the selected SLSS is periodically transmitted.

Next, it is assumed that the user apparatus UE has moved to outside the coverage or outside the area in which the GPS signal is receivable. The user apparatus UE receives the SLSS within the time window having the radio frame number and the subframe numbers specified in the processing procedure of step S14 to perform synchronization processing (S21 and S22).

Note that, in addition to specifying, by the initial search, the subframe through which the SLSS is transmitted, the user apparatus UEa may store sequence of the SLSS and/or the signal itself of the SLSS (S15) to shorten a synchronization time with the SLSS when moving to outside the coverage or outside the area in which the GPS signal is receivable (S22).

As described above, it is specified by 3GPP that the user apparatus UE transmits the SLSS when a predetermined condition is satisfied, such as a case where the user apparatus UE is located at the cell edge. However, as the half-duplex communication is adopted for D2D, the user apparatus UE is incapable of simultaneously performing transmission of the SLSS and reception (or monitoring) of the SLSS through the same subframe. Hence, when the user apparatus UE performs the initial search (S11) within the coverage or within an area in which a GPS signal is receivable, and it is required to transmit the SLSS, the user apparatus UE may drop the SLSS (not transmit the SLSS) at a predetermined probability so as to perform the initial search through the dropped subframes.

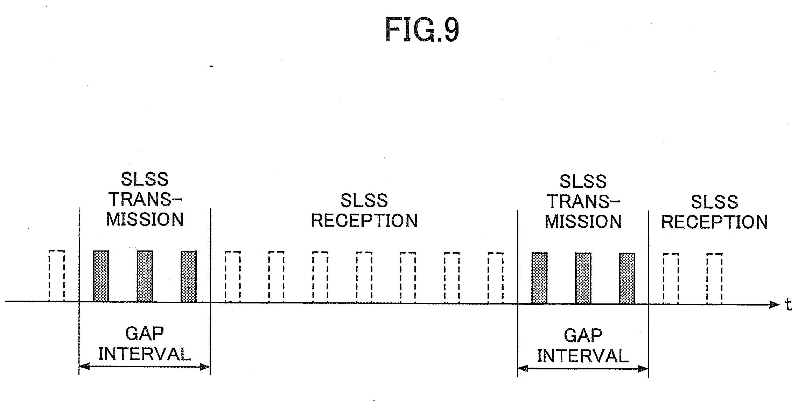

Further, as another method, for example, as illustrated in FIG. 9, the user apparatus UE may transmit the SLSSs within GAP intervals and may perform an initial search for the SLSS outside the GAP intervals. The GAP interval may be specified by subframe number(s) and a radio frame number, or may be specified by a UTC time. A length of the GAP interval is not particularly limited.

The predetermined probability and the GAP intervals may be reported to the user apparatus UE by a RRC signal or broadcast information (SIB) transmitted from the base station eNB, may be previously configured in a SIM, or may be reported to the user apparatus UE via a control signal of a higher layer transmitted from a core network. Further, the GAP interval(s) may be suitably decided by the user apparatus UE.

Further, as another method, the user apparatus UE may transmit the SLSS in accordance with any one offset of a plurality of offsets representing the subframes in which the SLSSs are transmitted/received, and may perform the initial search for the SLSS in accordance with an offset that is different from the offset used for transmitting the SLSS.

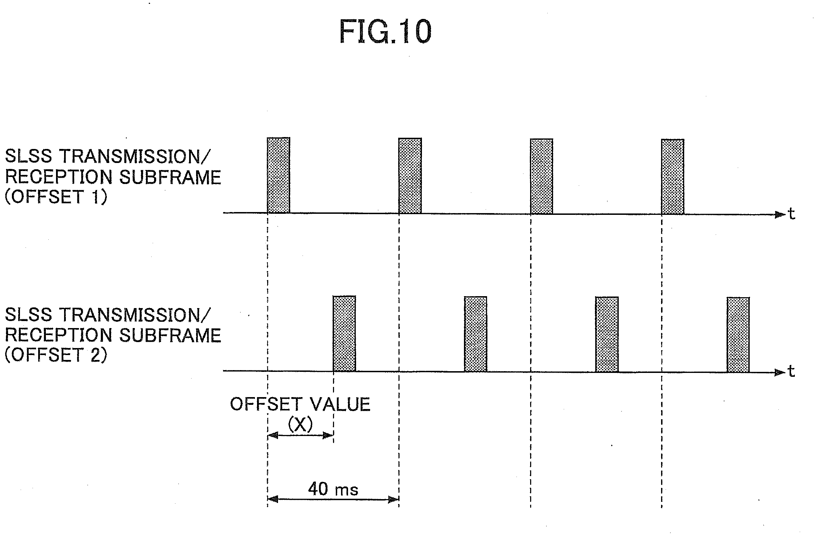

FIG. 10 is a diagram illustrating offsets of the subframes through which the SLSSs is transmitted/received. The example of FIG. 10 illustrates two offsets that are offset 1 and offset 2. The offset 1 illustrates a case of "offset value = 0" and the offset 2 illustrates a case of "offset value = X".

In V2X, an environment, in which many user apparatuses UE are present, is assumed. Hence, in the radio communication system, user apparatuses UE, which transmit the SLSS through the subframe designated by the offset 1 and receive the SLSS through the subframe designated by the offset 2, and user apparatuses UE, which transmit the SLSS through the subframe designated by the offset 2 and receive the SLSS through the subframe designated by the offset 1, are to be coexisted. As a result, each user apparatus UE can transmit the SLSS and perform an initial search for the SLSS while avoiding the effects of half-duplex communication. Further, by sufficiently making the range that can be taken by the offset value to be shorter than the transmission period (40 ms) of the SLSS, the time window described in the first embodiment can be achieved (the range that can be taken by the offset value is regarded as the time window).

Note that an offset applied to each user apparatus UE may be indicated by a RRC signal or the like from the base station eNB, may be determined by a predetermined identifier (such as UEID or RNTI), may be previously configured in a SIM or the like, or may be autonomously selected by the user apparatus UE. Note that the offsets illustrated in FIG. 10 are an example, and three or more offset patterns may be configured.

As described above, according to the second embodiment, the user apparatus UE can discover the SLSS, in advance, by previously performing the initial search for the SLSS within the coverage or within the area in which the GPS signal is receivable, and the user apparatus UE can quickly synchronize with the discovered SLSS after moving to outside the coverage or outside the area in which the GPS signal is receivable.

### [Functional configuration]

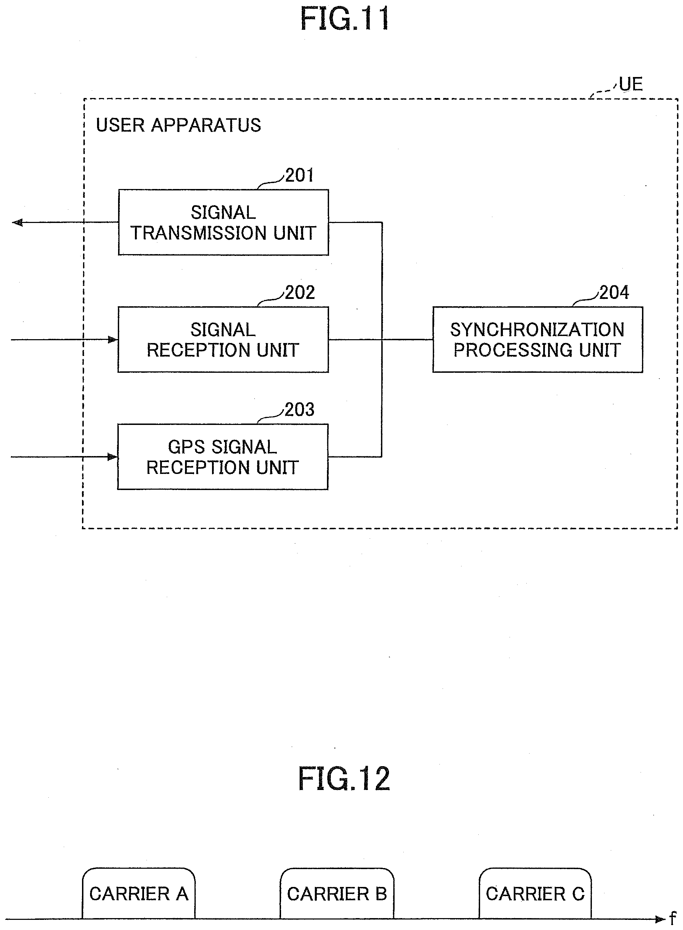

FIG. 11 is a diagram illustrating an example of a functional configuration of the user apparatus according to the second embodiment. As illustrated in FIG. 11, the user apparatus UE includes a signal transmission unit 201, a signal reception unit 202, a GPS signal reception unit 203, and a synchronization processing unit 204. Note that FIG. 11 illustrates only the functional units particularly relevant to the embodiment of the present invention in the user apparatus UE, and the user apparatus UE has at the least functions, not illustrated, for performing an operation in conformance with LTE. In addition, the functional configuration illustrated in FIG. 11 is merely one example. Functional classifications and names of the functional units are not limited as long as the operation of this embodiment is executable thereby.

The signal transmission unit 201 includes functions to generate various signals of a physical layer, from signals of higher layers to be transmitted from the user apparatus UE, and to transmit wirelessly the various signals. Further, the signal transmission unit 201 includes a transmission function for D2D signals, and a transmission function for cellular communication. Moreover, the signal transmission unit 201 includes a function to transmit SLSSs to other user apparatuses UE. Further, the signal transmission unit 201 may stop transmitting the SLSS in the subframe through which the signal reception unit 202 performs an initial search. Further, in the subframe through which the signal reception unit 202 performs the initial search, the signal transmission unit 201 may stop (drop) transmitting the SLSS at a predetermined probability. Further, the signal transmission unit 201 may transmit the SLSSs within GAP intervals previously assigned. Further, the signal transmission unit 201 may transmit the SLSS through the subframe that is assigned by any one offset of the plurality of offsets representing the subframes through which the SLSSs are transmitted/received.

The signal reception unit 202 includes functions to wirelessly receive various signals from other user apparatuses UE or the base station eNB, and to obtain signals of the higher layers from the received signals of the physical layer. Further, the signal reception unit 202 includes a reception function for D2D signals and a reception function for cellular communication.

Further, even when the user apparatus UE itself is located within the coverage area of the base station eNB or is located within the area where a GPS signal is receivable, the signal reception unit 202 operates to receive the SLSS by performing the initial search. Further, the signal reception unit 202 performs the initial search to identify the subframe through which the SLSS is receivable, and receives the SLSS on the identified subframe upon moving to outside the coverage or to outside the area in which the GPS signal is receivable. The signal reception unit 202 may perform the initial search for the SLSS upon detecting that RSRP or RSRQ of a signal that the base station eNB transmits is less than or equal to a predetermined threshold value; upon detecting that a reception level of the GPS signal is less than or equal to a predetermined threshold value; or upon detecting that a synchronization level (synchronization accuracy) is less than or equal to a fixed level.

As the GPS signal reception unit 203 is identical to the GPS signal reception unit 103, its description is omitted. The synchronization processing unit 204 uses a GPS signal, a SS, or a SLSS to perform synchronization.

### <Third embodiment>

### [Processing procedure]

In a radio communication system according to a third embodiment, for example, as illustrated in FIG. 12, based on an environment in which a plurality of carriers are operated, a specific carrier of the plurality of carriers is configured to be used for transmitting/ receiving the SLSS. Further, the user apparatus UE transmits and receives the SLSS (including the above described initial search) by the specific carrier.

The specific carrier used for communicating the SLSS may be a dedicated carrier used only for communicating the SLSS; or may be a carrier used for D2D communication for which the requirement on latency is not so high (i.e., a carrier preceded by communication of the SLSS).

In FIG. 12, carriers A to C are illustrated. For example, the carrier A may be the dedicated carrier only used to transmit/receive the SLSS, and the carriers B and C may be carriers used for D2D communication other than D2D communication for the SLSS.

An intended use of each carrier may be reported to the user apparatus UE by a RRC signal or broadcast information (SIB) transmitted from the base station eNB, may be previously configured in a SIM, or may be reported to the user apparatus UE via a control signal of a higher layer transmitted from a core network.

Here, a case is assumed in which a communication capability of the user apparatus UE (e.g., a number of carriers simultaneously used for transmission/reception) is lower than that required for the number of carriers simultaneously operated. For example, when the carriers A to C are configured as illustrated in FIG. 12, a case is assumed in which the user apparatus UE has only a capability for performing D2D communication using one or two carriers simultaneously.

Hence, the user apparatus UE may previously store information, which represents priority levels among carriers. Then, upon detecting that it is necessary to simultaneously communicate the SLSS and another D2D signal, the user apparatus UE may determine, based on the stored information that represents the priority levels, whether the communication of the SLSS is to be preceded.

For example, suppose that the user apparatus UE only has capability to simultaneously perform D2D communication only by one carrier. Additionally, suppose that a priority level of the carrier A is highest, and a priority level of the carrier B is second highest, and a priority level of the carrier C is the lowest, among the priority levels of the carriers. Furthermore, suppose that the carrier B is configured for SLSS transmission/reception.

In this case, for example, upon detecting that it is necessary to simultaneously perform transmission of a D2D signal by the carrier A and transmission/reception of the SLSS, the user apparatus UE operates so that transmission of the D2D signal by the carrier A is preceded. Further, for example, upon detecting that it is necessary to simultaneously perform reception of a D2D signal by the carrier C and transmission/reception of the SLSS, the user apparatus UE operates so that the transmission/reception of the SLSS by the carrier B is preceded.

The above-described priority levels may be defined in units of channel types, or in units resource pools. For example, when the priority levels are to be determined in units of channel types, a priority level of the PSDCH may be defined to be the highest, a priority level of the SLSS may be defined to be the second highest, and priority levels of the PSCCH and PSSCH may be defined to be the lowest. In this case, for example, upon detecting that it is necessary to simultaneously perform transmission of the D2D signal by the PSDCH by the carrier A and transmission/reception of the SLSS by the carrier B, the user apparatus UE operates so that the transmission of the D2D signal by the PSDCH is preceded.

As described above, according to the third embodiment, the user apparatus UE can simultaneously perform transmission/reception of the SLSS and transmission/reception of a D2D signal other than the SLSS by using a plurality of carriers. Further, as described by referring to FIG. 4, when the user apparatus UE performs monitoring of the SLSS and/or a initial search for the SLSS, it is not necessary for the user apparatus UE to drop (discard) the D2D signal scheduled to be transmitted. Accordingly, the user apparatus UE can efficiently receive the SLSS while avoiding the effects of half-duplex communication.

### [Functional configuration]

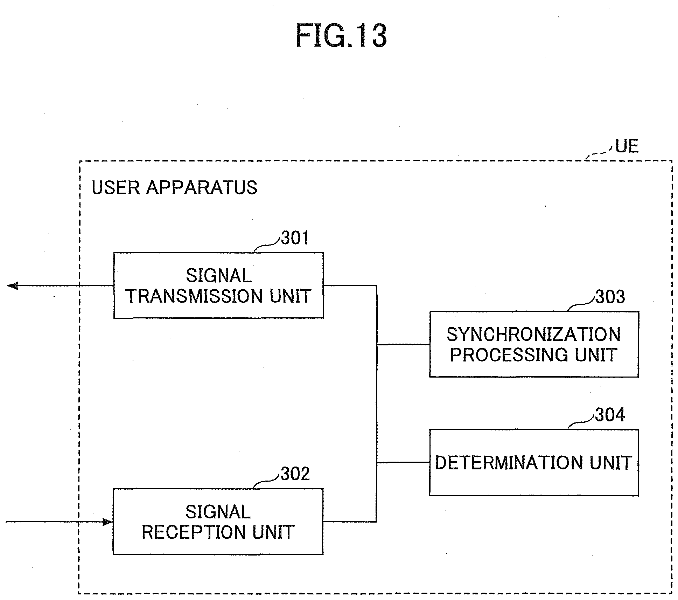

FIG. 13 is a diagram illustrating an example of a functional configuration of the user apparatus according to the third embodiment. As illustrated in FIG. 13, the user apparatus UE includes a signal transmission unit 301, a signal reception unit 302, a synchronization processing unit 303, and a determination unit 304. Note that FIG. 13 illustrates only the functional units particularly relevant to the embodiment of the present invention in the user apparatus UE, and the user apparatus UE has at the least functions, not illustrated, for performing an operation in conformance with LTE. In addition, the functional configuration illustrated in FIG. 13 is merely one example. Functional classifications and names of the functional units are not limited as long as the operation of this embodiment is executable thereby.

The signal transmission unit 301 includes functions to generate various signals of a physical layer, from signals of higher layers to be transmitted from the user apparatus UE, and to transmit wirelessly the various signals. Further, the signal transmission unit 301 includes a transmission function for D2D signals, and a transmission function for cellular communication. Moreover, the signal transmission unit 301 includes a function to transmit SLSSs to other user apparatuses UE. Moreover, the signal transmission unit 301 may include a function to simultaneously transmit D2D signals with a plurality of carriers. Moreover, the signal transmission unit 301 may transmit a SLSS with a specific carrier used for transmission/reception of a SLSS.

The signal reception unit 302 includes functions to wirelessly receive various signals from other user apparatuses UE or the base station eNB, and to obtain signals of the higher layers from the received signals of the physical layer. Further, the signal reception unit 302 includes a reception function for D2D signals and a reception function for cellular communication. Moreover, the signal reception unit 302 may include a function to simultaneously receive D2D signals with a plurality of carriers. Moreover, the signal reception unit 302 may receive (including the initial search) a SLSS with the specific carrier used for transmission/reception of a SLSS.

The synchronization processing unit 303 uses a GPS signal, a SS, or a SLSS to perform synchronization.

The determination unit 304 stores information that represents priority levels among the carriers. Further, the determination unit 304 determines, based on the priority levels among the carriers (the priority level of the specific carrier and the priority level of a carrier that is different from the specific carrier, for example), whether reception is to be performed on the specific carrier or D2D communication other than the synchronization signal is to be performed on the carrier that is different from the specific carrier. Further, the determination unit 304 may determine whether reception is to be performed on a specific carrier, or D2D communication other than D2D communication of the synchronization signal is to be performed on a carrier other than the specific carrier, based on the priority levels in units of channel types or in units of resource pools.

### <Fourth embodiment>

### [Processing procedure]

A user apparatus according to a fourth embodiment is for communicating an SLSS such that, within one subframe, a PSSS and an SSSS are mapped onto more symbols (three or more symbols) than usual.

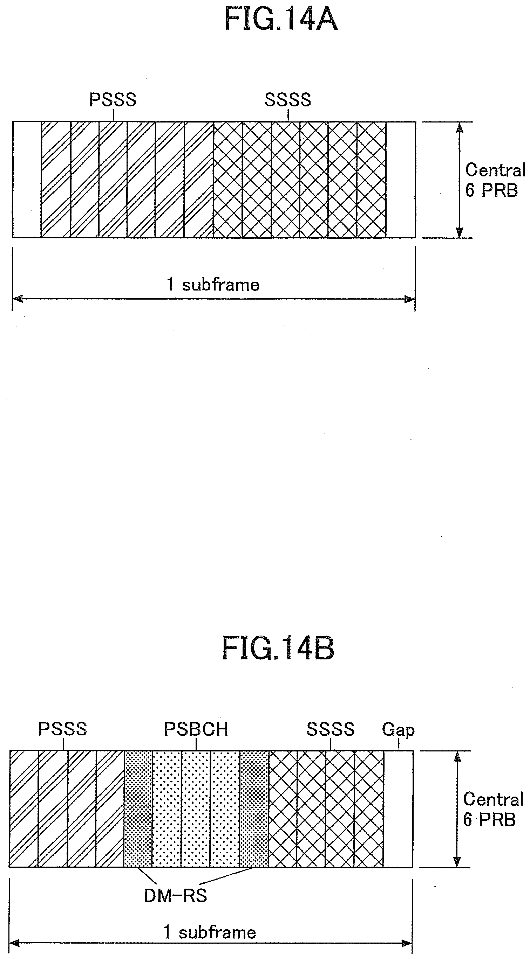

FIG. 14A and FIG. 14B are diagrams illustrating examples of structures of PSSS/SSSS according to the fourth embodiment. The example of FIG. 14A illustrates an example in which the PSSS and the SSSS are respectively mapped onto 6 symbols within one subframe.

As described above, when the user apparatus UE discovers a SLSS by the initial search, in-phase combining of up to approximately 10 subframes is required when the reception quality of the SLSS is low. In the example of FIG. 14A, an amount of the PSSS/SSSS included in one subframe is three times, compared to that of usual D2D illustrated in FIG. 3A and FIG. 3B. Accordingly, even when reception quality of the SLSS is low, the initial search can be completed by performing in-phase combining of up to 3 to 4 subframes approximately, so that the time required for the initial search can be shortened.

Further, as illustrated in FIG. 14B, a structure may be such that, within one subframe, the PSSS and the SSSS are respectively mapped onto 4 symbols, while DM-RSs and the PSBCHs are additionally mapped.

The structures illustrated in FIG. 14A and FIG. 14B are merely examples, and the numbers of the symbols of the PSSS and the SSSS included within one subframe may be different, respectively. Further, the user apparatus UE may use a plurality of subframes to transmit the PSSS, the SSSS, and the PSBCH.

Further, the PSSS and the SSSS according to the fourth embodiment may be identical to the PSSS/SSSS defined in conventional D2D (Rel-12) or may be a new synchronization signal (a synchronization signal of a sequence different from a conventional sequence).

Note that when PSSSs/SSSSs are mapped to more symbols than usual, the number of symbols for accommodating the PSBCH is limited (or the PSBCH may not be accommodated). Hence, part of or whole information to be reported by the PSBCH may be previously reported to the user apparatus UE by a RRC signal or broadcast information (SIB) transmitted from the base station eNB, may be previously configured in a SIM, or may be previously reported to the user apparatus UE via a control signal of a higher layer transmitted from a core network.

As described above, according to the fourth embodiment, the user apparatus UE can efficiently receive the SLSS, and the time required for the initial search can be shortened.

### [Functional configuration]

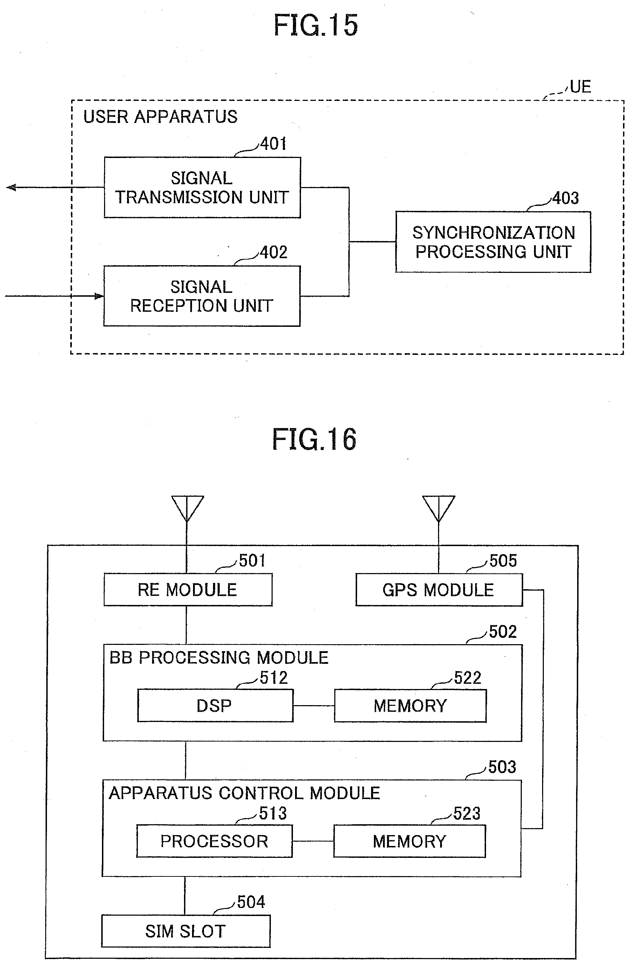

FIG. 15 is a diagram illustrating a functional configuration of the user apparatus according to the fourth embodiment. As illustrated in FIG. 15, the user apparatus UE includes a signal transmission unit 401, a signal reception unit 402, and a synchronization processing unit 403. Note that FIG. 15 illustrates only the functional units particularly relevant to the embodiment of the present invention in the user apparatus UE, and the user apparatus UE has at the least functions, not illustrated, for performing an operation in conformance with LTE. In addition, the functional configuration illustrated in FIG. 15 is merely one example. Functional classifications and names of the functional units are not limited as long as the operation of this embodiment is executable thereby.

The signal transmission unit 401 includes functions to generate various signals of a physical layer, from signals of higher layers to be transmitted from the user apparatus UE, and to transmit wirelessly the various signals. Further, the signal transmission unit 401 includes a transmission function for D2D signals, and a transmission function for cellular communication. Moreover, the signal transmission unit 401 includes a function to transmit SLSSs to other user apparatuses UE. Moreover, the signal transmission unit 401 includes a function to transmit a SLSS including a plurality of same PSSSs and a plurality of same SSSSs within one subframe.

The signal reception unit 402 includes functions to wirelessly receive various signals from other user apparatuses UE or the base station eNB, and to obtain signals of the higher layers from the received signals of the physical layer. Further, the signal reception unit 402 includes a reception function for D2D signals and a reception function for cellular communication. Moreover, the signal reception unit 402 includes a function to receive a SLSS including a plurality of same PSSSs and a plurality of same SSSSs within one subframe.

The synchronization processing unit 403 uses a GPS signal, a SS, or a SLSS to perform synchronization. Further, the synchronization processing unit 403 includes a function to use the SLSS, including the plurality of same PSSSs and the plurality of same SSSSs within one subframe, to perform synchronization processing.

### <Hardware configuration>

In the functional configuration of the user apparatus UE described in each embodiment, the entirety may be implemented by a hardware circuit (one or more IC chips, for example); or a part may be formed of a hardware circuit while the other part may be implemented by a CPU and a program.

FIG. 16 is a drawing illustrating an example of a hardware configuration of the user apparatus according to each embodiment. FIG. 16 illustrates a configuration closer to an implementation example as compared to FIG. 7, FIG. 11, and FIG. 15. As illustrated in FIG. 16, the user apparatus UE includes an RE (Radio Equipment) module 501 that performs processing related to a radio signal, a BB (Base Band) processing module 502 that performs baseband signal processing, an apparatus control module 503 that performs processing of a higher layer, etc., a SIM slot 504 that is an interface for accessing a SIM card, and a GPS module 505 that receives a GPS signal.

The RE module 501 generates a radio signal to be transmitted from an antenna by performing D/A (Digital-to-Analog) conversion, modulation, frequency conversion, power amplification, etc., for a digital baseband signal received from the BB processing module 502. Further, the RE module 501 generates a digital baseband signal by performing frequency conversion, A/D (Analog to Digital) conversion, demodulation, etc., for a received radio signal, and transmits the generated signal to the BB processing module 502. The RE module 501 includes, for example, a part of the signal transmission unit 101 and the signal reception unit 102 according to the first embodiment, a part of the signal transmission unit 201 and the signal reception unit 202 according to the second embodiment, a part of the signal transmission unit 301 and the signal reception unit 302 according to the third embodiment, or a part of the signal transmission unit 401 and the signal reception unit 402 according to the fourth embodiment.

The BB processing module 502 performs processing of converting an IP packet and a digital baseband signal bi-directionally. A DSP (Digital Signal Processor) 512 is a processor that performs signal processing in the BB processing module 502. A memory 522 is used as a work area of the DSP 512. The RE module 501 includes, for example, a part of the signal transmission unit 101, a part of the signal reception unit 102, and the synchronization processing unit 104 according to the first embodiment, a part of the signal transmission unit 201, a part of the signal reception unit 202, and the synchronization processing unit 204 according to the second embodiment, a part of the signal transmission unit 301, a part of the signal reception unit 302, the synchronization processing unit 303, and the determination unit 304 according to the third embodiment, or a part of the signal transmission unit 401, a part of the signal reception unit 402, and the synchronization processing unit 403 according to the fourth embodiment.

The apparatus control module 503 performs protocol processing of an IP layer, processing of various applications, etc. A processor 513 is a processor that performs processing that the apparatus control module 503 performs. A memory 523 is used as a work area of the processor 513. Further, the processor 513 reads and writes data from and to the SIM via the SIM slot 504.

The GPS module 505 receives a GPS signal and modulates the received GPS signal. Further, the GPS module 505 includes the GPS signal reception unit 103 according to the first embodiment or the GPS signal reception unit 203 according to the second embodiment.

### <Conclusion>

As described above, according to the embodiment, there is provided a user apparatus of a radio communication system supporting D2D communication, the user apparatus including a receiver configured to receive a first synchronization signal transmitted from a base station, a second synchronization signal transmitted from another user apparauts, or an external synchronization signal or external synchronization information transmitted from an external synchronization source; and a synchronization processor configured to execute synchronization using the first synchronization signal, the second synchronization signal, or the external synchronization signal or the external synchronization information received by the receiver; wherein, upon detecting that the user apparatus is outside a coverage area of the base station or outside an area in which the synchronization signal or the synchronization information can be received, the receiver is configured to receive the second synchronization signal by executing an initial search within a time window defined for monitoring the second synchronization signal. According to this user apparatus UE, a technique, with which a synchronization signal for D2D can be effectively received, is provided.

Further, the time window may be defined by a radio frame number and one or more subframe numbers identified by synchronizing with the first synchronization signal, the external synchronization signal or the external synchronization information, or the time window may be defined by a UTC time. As a result, it becomes possible to define, by various methods, a start point and an end point of the time window.

Further, the time window may be a time shorter than 40 ms. As a result, the user apparatus UE becomes able to perform the initial search efficiently. Further, when performing the initial search, the user apparatus UE becomes able to reduce a rate, at which a D2D signal scheduled to be transmitted is dropped, to a rate less than 2%.

Further, according to the embodiment, there is provided a user apparatus of a radio communication system supporting D2D communication, the user apparatus including a receiver configured to receive a first synchronization signal transmitted from a base station, a second synchronization signal transmitted from another user apparatus, or an external synchronization signal or external synchronization information transmitted from an external synchronization source; and a synchronization processor configured to execute synchronization using the first synchronization signal, the second synchronization signal, or the external synchronization signal or the external synchronization information received by the receiver; wherein the receiver is configured to identify, by executing an initial cell search within a coverage area of the base station or within an area in which the external synchronization signal or the external synchronization information can be received, a subframe with which the second synchronization signal can be received, and wherein, upon detecting that the user apparatus moves outside the coverage area of the base station or outside the area in which the synchronization signal or the synchronization information can be received, the receiver is configured to receive the second synchronization signal with the identified subframe. According to this user apparatus UE, a technique, with which a synchronization signal for D2D can be effectively received, is provided.

Further, upon detecting that reception quality of a predetermined signal received from the base station is less than or equal to a predetermined threshold value, or upon detecting that a received level of the external synchronization signal or the external synchronization information is less than or equal to a predetermined threshold value, the receiver may be configured to execute the initial cell search. As a result, the user apparatus UE becomes able to operate to perform the initial search only when being located at a cell edge, for example, and it becomes possible to effectively perform the initial search within the coverage.

The user apparatus may further include a transmitter configured to transmit a D2D synchronization signal, wherein the transmitter is configured to stop transmission of the D2D synchronization signal on a subframe on which the receiver executes the initial cell search. As a result, the user apparatus UE becomes able to satisfy both transmission of the SLSS and the initial search.

The user apparatus may further include a transmitter configured to transmit a synchronization signal for D2D. The transmitter transmits the synchronization signal for D2D when a predetermined periodic subframe is within a GAP interval. The receiver may receive the second synchronization signal through the subframe with which the transmitter does not transmit the synchronization signal for D2D. As a result, the user apparatus UE becomes able to execute both transmission of the SLSS and the initial search.

Further, the receiver may be configured to execute the initial search on a specific carrier used for communicating a D2D synchronization signal. As a result, the user apparatus UE becomes able to efficiently receive the SLSS.

The user apparatus may further include a determination unit configured to determine whether the initial search is executed on the specific carrier or the D2D communication other than D2D communication of a synchronization signal is executed on a carrier other than the specific carrier, based on a priority level of the specific carrier and a priority level of the carrier other than the specific carrier. As a result, even if the capability for the user apparatus UE to execute simultaneous communication using a plurality of carriers is limited, a determination can be made as to communication of which D2D signal is to be preceded.

Further, the second synchronization signal may be such that, within one subframe, a primary synchronization signal is mapped onto thee or more symbols and a secondary synchronization signal is mapped onto three or more symbols. As a result, the user apparatus UE becomes able to collectively receive PSSSs/SSSSs, and a time required for the initial search can be shortened.

Further, according to the embodiment, there is provided a synchronization method executed by a user apparatus of a radio communication system supporting D2D communication, the synchronization method including: receiving a first synchronization signal transmitted from a base station, a second synchronization signal transmitted from another user apparatus, or an external synchronization signal or external synchronization information transmitted from an external synchronization source; and executing synchronization using the first synchronization signal, the second synchronization signal, or the external synchronization signal or the external synchronization information; wherein, upon detecting that the user apparatus is outside a coverage area of the base station or outside an area in which the synchronization signal or the synchronization information can be received, the receiving receives the second synchronization signal by executing an initial search within a time window defined for monitoring the second synchronization signal. According to this synchronization method, a technique, with which a synchronization signal for D2D can be effectively received, is provided.

Further, according to the embodiment, there is provided a synchronization method executed by a user apparatus of a radio communication system supporting D2D communication, the synchronization method including: receiving a first synchronization signal transmitted from a base station, a second synchronization signal transmitted from another user apparatus, or an external synchronization signal or external synchronization information transmitted from an external synchronization source; and executing synchronization using the first synchronization signal, the second synchronization signal, or the external synchronization signal or the external synchronization information; wherein the receiving identifies, by executing an initial cell search within a coverage area of the base station or within an area in which the external synchronization signal or the external synchronization information can be received, a subframe with which the second synchronization signal can be received, and wherein, upon detecting that the user apparatus moves outside the coverage area of the base station or outside the area in which the synchronization signal or the synchronization information can be received, the receiving receives the second synchronization signal with the identified subframe. According to this synchronization method, a technique, with which a synchronization signal for D2D can be effectively received, is provided.

### <Supplementary description of embodiments>

The respective embodiments may be suitably combined. That is, the first embodiment may be combined with the second embodiment, the first embodiment may be combined with the third embodiment, or the first embodiment may be combined with the fourth embodiment. Additionally, the second embodiment may be combined with the third embodiment, or the second embodiment may be combined with the fourth embodiment. Additionally, the third embodiment may be combined with the fourth embodiment.

Further, the first embodiment may be combined with the second embodiment and the third embodiment, the first embodiment may be combined with the third embodiment and the fourth embodiment, the first embodiment may be combined with the second embodiment and the fourth embodiment, or the second embodiment may be combined with the third embodiment and the fourth embodiment. Also, the first embodiment may be combined with the second embodiment, the third embodiment, and the fourth embodiment.

The RRC signal may be a RRC message.

In each embodiment, an example of using the GPS as an external synchronization signal or external synchronization information to perform synchronization is described. However, each embodiment is not limited to the GPS, but may be applied to a case of using a synchronization signal or a synchronization clock, delivered through a wired circuit, radio, television, or WiFi (registered trademark), for the external synchronization signal or the external synchronization information.

The method claims present elements of the various steps in a sample order; and are not limited to the presented specific order, unless as explicitly stated in the claims.

Each apparatus (user apparatus UE/base station eNB) described in the embodiments of the present invention may have a configuration that is implemented by executing a program by a CPU (processor) included in the apparatus with a memory, may have a configuration that is implemented by hardware provided with a logic for the processing described in the embodiments, such as a hardware circuit, or may have a mixture of programs and hardware.

Embodiments of the present invention are described above. However, the disclosed invention is not limited to the embodiments as described above, and a person skilled in the art may understand that variations, modifications, and replacements may be made. Although specific values are used in the above descriptions to facilitate the understanding of the invention, the values are just examples and other appropriate values may also be used unless otherwise mentioned. Classifications of items in the above description are not essential to the present invention. Subject matter described in two or more items may be combined and used as needed, and subject matter described in one item may be applied to subject matter described in another item (unless contradictory). Boundaries of functional units or processing units in functional block diagrams do not necessarily correspond to boundaries of physical components. Operations of multiple functional units may be performed by one physical component, or an operation of one functional unit may be performed by multiple physical components. The order in the sequence and the flowchart described in the embodiments may be changed unless they become inconsistent. Although the functional block diagrams are used to describe the user apparatus UE and the base station eNB for the purpose of illustrating processing, the user apparatus UE and the base station eNB may be implemented by hardware, software, or a combination of these. Software to be operated by a processor included in the user apparatus UE according to the embodiments of the present invention and software to be executed by a processor included in the base station eNB according to the embodiments of the present invention may be stored in any appropriate storage medium such as a random access memory (RAM), a flash memory, a read-only memory (ROM), an EPROM, an EEPROM, a register, a hard disk drive (HDD), a removable disk, a CD-ROM, a database, or a server.

Note that, in each embodiment, the SS is an example of a first synchronization signal. The SLSS is an example of a second synchronization signal. The PSSS is an example of a primary synchronization signal. The SSSS is an example of a secondary synchronization signal. The SLSS is an example of a synchronization signal for D2D.

The present patent application is based on and claims the benefit of priority of Japanese Patent Application No. 2015-197223 filed on October 2, 2015, and the entire contents of the Japanese Patent Application No. 2015-197223 is hereby incorporated by reference.

### LIST OF REFERENCE SYMBOLS

- UE: User Apparatus
- eNB: Base Station
- 10: GPS Satellite
- 101: Signal Transmission Unit
- 102: Signal Reception Unit
- 103: GPS Signal Reception Unit
- 104: Synchronization Processing Unit
- 201: Signal Transmission Unit
- 202: Signal Reception Unit
- 203: GPS Signal Reception Unit
- 204: Synchronization Processing Unit
- 301: Signal Transmission Unit
- 302: Signal Reception Unit
- 303: Synchronization Processing Unit
- 304: Determination Unit
- 401: Signal Transmission Unit
- 402: Signal Reception Unit
- 403: Synchronization Processing Unit
- 501: RE Module
- 502: BB Processing Module
- 503: Apparatus Control Module
- 504: SIM Slot
- 505: GPS Module

## Claims

1. A user apparatus of a radio communication system supporting D2D communication, the user apparatus comprising:
a receiver configured to receive a first synchronization signal transmitted from a base station, a second synchronization signal transmitted from another user apparatus, or an external synchronization signal or external synchronization information transmitted from an external synchronization source; and
a synchronization processor configured to execute synchronization using the first synchronization signal, the second synchronization signal, or the external synchronization signal or the external synchronization information received by the receiver;
wherein, upon detecting that the user apparatus is outside a coverage area of the base station or outside an area in which the synchronization signal or the synchronization information can be received, the receiver is configured to receive the second synchronization signal by executing an initial search within a time window defined for monitoring the second synchronization signal.

2. The user apparatus according to claim 1, wherein the time window is defined by a radio frame number and one or more subframe numbers identified by synchronizing with the first synchronization signal, the external synchronization signal, or the external synchronization information, or the time window is defined by a UTC time.

3. A user apparatus of a radio communication system supporting D2D communication, the user apparatus comprising:
a receiver configured to receive a first synchronization signal transmitted from a base station, a second synchronization signal transmitted from another user apparatus, or an external synchronization signal or external synchronization information transmitted from an external synchronization source; and
a synchronization processor configured to execute synchronization using the first synchronization signal, the second synchronization signal, or the external synchronization signal or the external synchronization information received by the receiver;
wherein the receiver is configured to identify, by executing an initial cell search within a coverage area of the base station or within an area in which the external synchronization signal or the external synchronization information can be received, a subframe with which the second synchronization signal can be received, and
wherein, upon detecting that the user apparatus moves outside the coverage area of the base station or outside the area in which the synchronization signal or the synchronization information can be received, the receiver is configured to receive the second synchronization signal with the identified subframe.

4. The user apparatus according to claim 3, wherein, upon detecting that reception quality of a predetermined signal received from the base station is less than or equal to a predetermined threshold value, or upon detecting that a received level of the external synchronization signal or the external synchronization information is less than or equal to a predetermined threshold value, the receiver is configured to execute the initial cell search.

5. The user apparatus according to claim 3 or 4, further comprising:
a transmitter configured to transmit a D2D synchronization signal,
wherein the transmitter is configured to stop transmission of the D2D synchronization signal on a subframe on which the receiver executes the initial cell search.

6. The user apparatus according to any one of claims 1 through 5, wherein the receiver is configured to execute the initial search on a specific carrier used for communicating a D2D synchronization signal.

7. The user apparatus according to claim 6, further comprising:
a determination unit configured to determine whether the initial search is executed on the specific carrier or the D2D communication other than D2D communication of a synchronization signal is executed on a carrier other than the specific carrier, based on a priority level of the specific carrier and a priority level of the carrier other than the specific carrier.

8. The user apparatus according to any one of claims 1 through 7, wherein the second synchronization signal is such that, within one subframe, a primary synchronization signal is mapped onto thee or more symbols and a secondary synchronization signal is mapped onto three or more symbols.

9. A synchronization method executed by a user apparatus of a radio communication system supporting D2D communication, the synchronization method comprising:
receiving a first synchronization signal transmitted from a base station, a second synchronization signal transmitted from another user apparatus, or an external synchronization signal or external synchronization information transmitted from an external synchronization source; and
executing synchronization using the first synchronization signal, the second synchronization signal, or the external synchronization signal or the external synchronization information;
wherein, upon detecting that the user apparatus is outside a coverage area of the base station or outside an area in which the synchronization signal or the synchronization information can be received, the receiving receives the second synchronization signal by executing an initial search within a time window defined for monitoring the second synchronization signal.

10. A synchronization method executed by a user apparatus of a radio communication system supporting D2D communication, the synchronization method comprising:
receiving a first synchronization signal transmitted from a base station, a second synchronization signal transmitted from another user apparatus, or an external synchronization signal or external synchronization information transmitted from an external synchronization source; and
executing synchronization using the first synchronization signal, the second synchronization signal, or the external synchronization signal or the external synchronization information;
wherein the receiving identifies, by executing an initial cell search within a coverage area of the base station or within an area in which the external synchronization signal or the external synchronization information can be received, a subframe with which the second synchronization signal can be received, and
wherein, upon detecting that the user apparatus moves outside the coverage area of the base station or outside the area in which the synchronization signal or the synchronization information can be received, the receiving receives the second synchronization signal with the identified subframe.
